# EUROPEAN PATENT APPLICATION

(11) **EP 4 327 913 A1**
(43) Date of publication of application: **28.02.2024**
(21) Application number: 22811045.8
(22) Date of filing: 06.04.2022
(51) Int. Cl.: B01D 46/00, B01D 53/14, B01D 53/62, B01D 53/78

(54) **MIST DISCHARGE DEVICE AND ABSORPTION LIQUID-ABSORBING TOWER**

(30) Priority: 24.05.2021 JP 2021086907
(71) Applicant: Mitsubishi Heavy Industries, Ltd., Tokyo 100-8332 (JP)
(72) Inventor: YUI, Yuichi, Tokyo 100-8332 (JP); YONEDA, Jiro, Tokyo 100-8332 (JP); ITO, Koki, Tokyo 100-8332 (JP); HIRATA, Takuya, Tokyo 100-8332 (JP)
(74) Representative: Studio Torta S.p.A.
(86) International application number: PCT/JP2022/017206
(87) International publication number: WO 2022/249771

(57) **Abstract**

Provided is a mist discharge device configured to discharge a mist trapped by a demister, in which the demister is disposed in a gas flow path allowing gas to flow from the lower side to the upper side in the vertical direction, has a lower side serving as an inlet side of the gas and an upper side serving as an outlet side of the gas, and is configured to trap the mist contained in the gas, and the mist discharge device includes a protrusion protruding downward from the inlet side of the demister. The protrusion is a plate-like member extending downward, and a plurality of the plate-like members are disposed to be horizontally spaced at predetermined intervals.

## Description

### Field

The present disclosure relates to a mist discharge device and an absorbent absorber.

### Background

A moisture separator including a wire mesh layer has been conventionally known (see Patent Literature 1, for example). Droplets contained in wet steam flowing through the wire mesh layer adhere to the wire mesh, whereby the wire mesh layer separates the droplets from the wet steam. The moisture separator includes a drain receiver configured to receive drain water, that is, the droplets separated by the wire mesh layer. The drain receiver extends in a direction inclined with respect to the horizontal direction along the wire mesh layer and is configured to receive the drain water from the wire mesh layer and guide the drain water to the outside of the wire mesh layer in the horizontal direction.

### Citation List

### Patent Literature

Patent Literature 1: Japanese Patent Application Laid-open No. 2016-150297

### Summary

### Technical Problem

Here, the flow direction of the wet steam flowing through the wire mesh layer of the moisture separator in Patent Literature 1 is in agreement with the horizontal direction, and the drain water flows down the wire mesh layer toward the lower side in the vertical direction. On the other hand, gas flowing through a demister configured to trap a mist flows from the lower side toward the upper side in the vertical direction. When the gas flows from the lower side toward the upper side, the mist trapped by the demister accumulates, as drain water, in the demister. At this time, if the drain water is not properly discharged, the drain water accumulates in an upper portion of the demister. In this case, there is a possibility that a mist re-scatters from the accumulated drain water.

Therefore, an object of the present disclosure is to provide a mist discharge device capable of suppressing re-scattering of mist and an absorbent absorber.

### Solution to Problem

A mist discharge device according to the present disclosure is configured to discharge a mist trapped by a demister. The demister is disposed in a gas flow path allowing gas to flow from a lower side to an upper side in a vertical direction, the demister having a lower side serving as an inlet side of the gas and an upper side serving as an outlet side of the gas, the demister being configured to trap the mist contained in the gas. The mist discharge device includes a protrusion protruding downward from the inlet side of the demister.

An absorbent absorber according to the present disclosure includes: an absorber body to which CO₂-containing gas is supplied; an absorbent supply unit configured to supply an absorbent to the absorber body; a demister disposed downstream from an absorbent supply point of the absorbent supply unit of the absorber body in a flow direction of the gas, and configured to trap a mist containing a CO₂-containing absorbent; and the above-described mist discharge device to discharge the mist trapped by the demister.

### Advantageous Effects of Invention

According to the present disclosure, re-scattering of mist can be suppressed.

### Brief Description of Drawings

FIG. 1 is a schematic diagram of a CO₂ capture system according to a first embodiment.
FIG. 2 is a schematic diagram illustrating a demister and a mist discharge device according to the first embodiment.
FIG. 3 is a perspective view of the mist discharge device.
FIG. 4 is a schematic cross-sectional view of the mist discharge device.
FIG. 5 is a diagram illustrating various dimensions in FIG. 4.
FIG. 6 is a graph illustrating the performance of different types of mist discharge devices.
FIG. 7 is a schematic cross-sectional view of a mist discharge device according to a second embodiment.
FIG. 8 is a schematic diagram illustrating a mist discharge device according to a third embodiment. Description of Embodiments

Hereinafter, embodiments according to the present disclosure will be described in detail with reference to the drawings. Note that the present invention is not limited to the embodiments. In addition, constituents in the following embodiments may include constituents that are easily substitutable by those skilled in the art or have substantially the same configurations. Furthermore, the constituents described below can be appropriately combined, and when there are a plurality of embodiments, the embodiments can be appropriately combined.

### [First Embodiment]

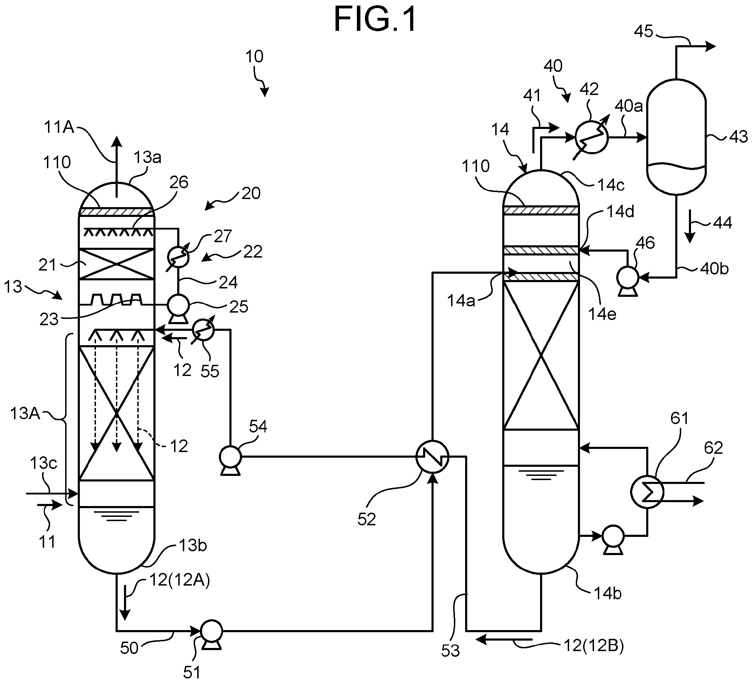

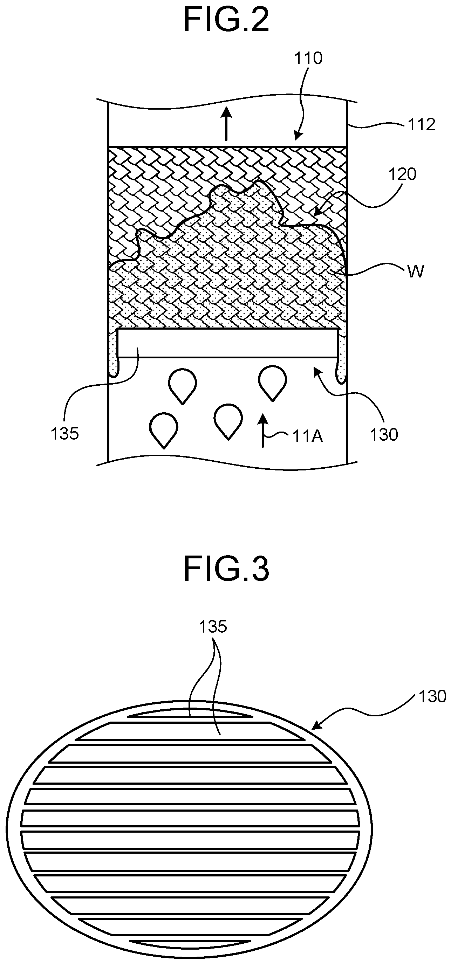

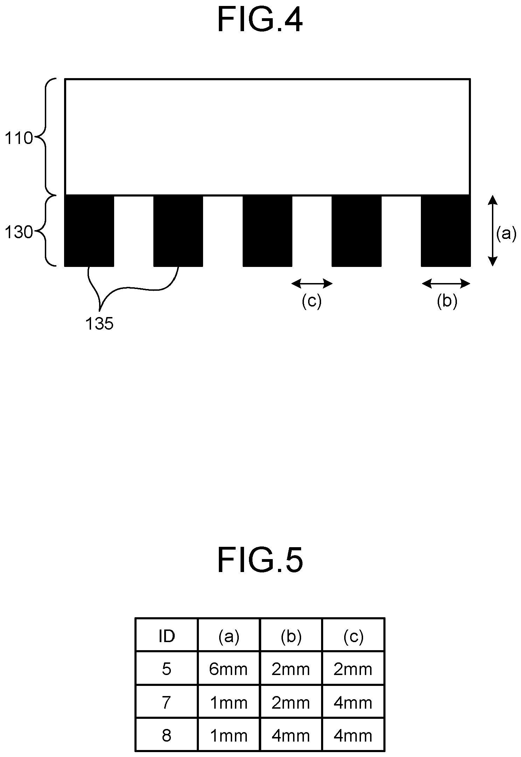

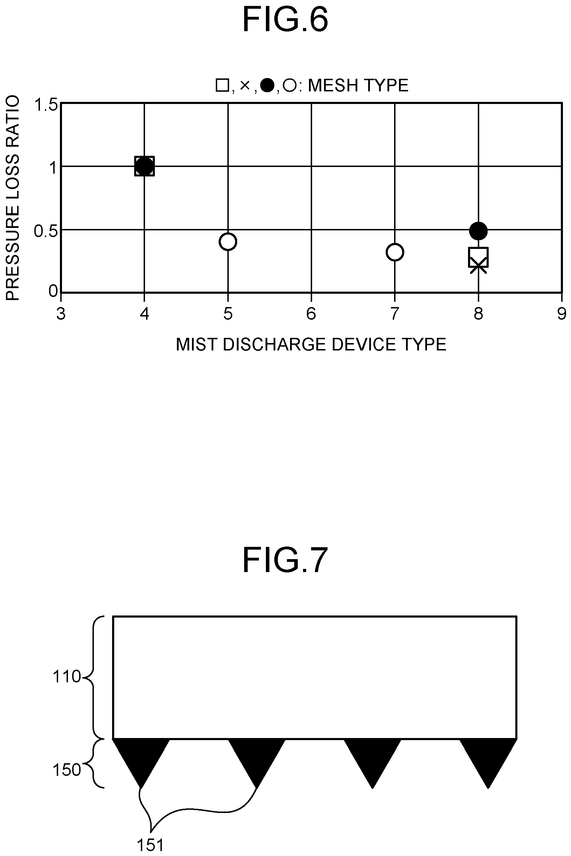

FIG. 1 is a schematic diagram of a CO₂ capture system according to a first embodiment. FIG. 2 is a schematic diagram illustrating a demister and a mist discharge device according to the first embodiment. FIG. 3 is a perspective view of the mist discharge device. FIG. 4 is a schematic cross-sectional view of the mist discharge device. FIG. 5 is a diagram illustrating various dimensions in FIG. 4. FIG. 6 is a graph illustrating the performance of different types of mist discharge devices. First, the CO₂ capture system will be described with reference to FIG. 1.

### CO₂ capture system

The CO₂ capture system according to the first embodiment is configured to remove carbon dioxide (CO₂) from gas in a CO₂ absorber (an absorbent absorber) by using a CO₂ absorption component as an absorption component for absorbing CO₂ and regenerate a CO₂ absorbent in an absorbent regenerator.

As illustrated in FIG. 1, a CO₂ capture system 10 according to the first embodiment includes: a CO₂ absorber (hereinafter, referred to as "the absorber") 13 including a CO₂ absorber unit (hereinafter, referred to as "the absorber unit") 13A configured to allow CO₂-containing introduced gas (hereinafter, referred to as "the gas") 11 to be introduced thereinto and bring CO₂ contained in the gas into contact with a CO₂ absorbent 12 to remove the CO₂; an absorbent regenerator (hereinafter, referred to as "the regenerator") 14 configured to regenerate a CO₂ absorbent 12 having absorbed CO₂, namely, a rich solution 12A by steam from a reboiler 61; a rich solution supply line 50 configured to extract the rich solution 12A from the absorber 13 and introduce the rich solution 12A into the regenerator 14; and a lean solution supply line (absorbent supply unit) 53 configured to extract, from the regenerator 14, the CO₂ absorbent which is regenerated in the regenerator 14 and from which CO₂ has been released, namely, a lean solution 12B, and introduce the lean solution 12B to the absorber 13 and reuse the lean solution 12B as a CO₂ absorbent. As the CO₂ absorbent 12, the rich solution 12A having absorbed CO₂ and the lean solution 12B from which CO₂ has been released are circulated and reused in the CO₂ capture system. Note that descriptions about the CO₂ capture system according to the present embodiment are only an outline of the CO₂ capture system, and accordingly, descriptions about attachments of the CO₂ capture system will be partially omitted.

The gas 11 containing CO₂ is cooled by cooling water in a cooling unit and then supplied to the absorber 13. In the absorber 13, the gas 11 introduced by a gas introduction line 13c is brought into countercurrent contact with the CO₂ absorbent 12 containing an amine-based CO₂ absorption component, and CO₂ in the gas 11 is absorbed into the CO₂ absorbent 12 through chemical reaction. In the absorber 13, a mist of CO₂-free flue gas 11A from which CO₂ has been removed is trapped by a demister 110 and then discharged from a top 13a of the absorber 13 to the system. The demister 110 will be described later.

A water washing unit 20 is provided between the CO₂ absorber unit 13A and the demister 110 inside the absorber 13. The water washing unit 20 includes a gas-liquid contact unit 21 and a washing liquid circulator 22. The gas-liquid contact unit 21 is configured to bring washing water into gas-liquid contact with the gas 11 entrained in the CO₂ absorbent having passed through the CO₂ absorber unit 13A and absorbed CO₂ and trap the CO₂ absorbent 12 contained in the gas 11 by using the washing water. The washing liquid circulator 22 includes a washing water receiver 23, a circulation line 24, a pump 25, a washing water supply unit 26, and a cooling unit 27. The washing water receiver 23 is disposed upstream from the gas-liquid contact unit 21 in the gas flow, that is, disposed vertically below the gas-liquid contact unit 21. The washing water receiver 23 is configured to trap washing water having passed through the gas-liquid contact unit 21 and fallen into the washing water receiver 23. The circulation line 24 is configured to connect the washing water receiver 23 to the washing water supply unit 26, outside the absorber 13. The pump 25 is installed in the circulation line 24 and configured to send washing water in a predetermined direction. The washing water supply unit 26 is disposed downstream from the gas-liquid contact unit 21 in the gas flow, that is, disposed vertically above the gas-liquid contact unit 21. The washing water supply unit 26 is configured to supply, into the absorber 13, a washing liquid supplied by the circulation line 24. The supplied washing liquid falls into the gas-liquid contact unit 21. The washing water supply unit 26 supplies the washing liquid by injecting in a spraying manner, for example. The cooling unit 27 is installed in the circulation line 24 and configured to cool washing water. As described above, the water washing unit 20 supplies the washing liquid from above the gas-liquid contact unit and recovers the washing liquid from below and circulates the washing liquid, and thereby traps the absorbent contained in the gas 11. The gas having passed through the water washing unit 20 is such that the gas 11 entrains a part of the washing liquid including the absorbent. In other words, the gas having passed through the water washing unit 20 entrains a mist containing the CO₂ absorbent. The demister 110 is configured to trap the mist containing the CO₂ absorbent.

Furthermore, the CO₂ capture system 10 extracts the rich solution 12A having absorbed CO₂, from a bottom 13b of the absorber 13 by means of a rich solution supply line 50. The CO₂ capture system 10 pressurizes the rich solution 12A by using a rich solution pump 51, and heats the rich solution 12A with the lean solution 12B regenerated in the regenerator 14 in a rich-and-lean solutions heat exchanger 52 disposed on the intersection of the rich solution supply line 50 and a lean solution supply line 53, and then supplies the rich solution 12A to the regenerator 14.

The rich solution 12A is released from a rich solution introduction unit 14a disposed in the upper part of the regenerator 14 to the inside of the regenerator 14. The regenerator 14 causes the release of most of CO₂ inside the regenerator 14 by an endothermic reaction between the rich solution 12A and steam supplied from the bottom of the regenerator 14 by the reboiler 61. When releasing a part or most of CO₂ inside the regenerator 14, then the CO₂ absorbent becomes a semi-lean solution. By the time the semi-lean solution reaches a bottom 14b of the regenerator 14, the semi-lean solution becomes the CO₂ absorbent (lean solution) 12B from which almost all the CO₂ has been removed. In the rich solution 12A, part of the lean solution 12B is heated by the reboiler 61 to which saturated steam 62 is supplied, whereby steam is supplied to the inside of the regenerator 14.

In the regenerator 14, a mist of entrained gas (hereinafter, referred to as "the entrained gas") 41 including, as main components, steam and CO₂ released from the rich solution 12A and the semi-lean solution in the regenerator 14 is trapped by the demister 110 and then discharged from a top 14c of the regenerator 14.

The entrained gas 41 is supplied to a regenerator condensing unit 40. The regenerator condensing unit 40 is configured to cool the entrained gas by a cooler 42 to condense steam, and separate the resultant into in-regenerator condensed water (hereinafter, referred to as "the condensed water") 44 and CO₂ gas 45 in a gas-liquid separator 43. The regenerator condensing unit 40 injects the separated CO₂ gas 45 into an oil field, for example, by enhanced oil recovery (EOR) or stores the separated CO₂ gas 45 in an aquifer.

The regenerated CO₂ absorbent (lean solution) 12B is extracted from the bottom 14b of the regenerator 14 by the lean solution supply line 53, cooled with the rich solution 12A in the rich-and-lean solutions heat exchanger 52, and subsequently subjected to pressurization by the lean solution pump 54, and further cooled by a lean solution cooler 55, and then supplied to the absorber 13.

In the first embodiment, the regenerator condensing unit 40 configured to condense moisture from the entrained gas 41 discharged from the top 14c of the regenerator 14 is disposed outside the regenerator. The regenerator condensing unit 40 includes: a discharge line 40a configured to discharge the entrained gas 41 from the top 14c of the regenerator 14; the cooler 42 interposed in the discharge line 40a; the gas-liquid separator 43 configured to separate the CO₂ gas 45 and the condensed water 44 produced by condensing steam by the cooler 42; a reflux line 40b configured to reflux the condensed water 44 to the top side of the regenerator; and a reflux water circulation pump 46 interposed in the reflux line 40b. The condensed water 44 separated from the entrained gas 41 and refluxed by the gas-liquid separator 43 is introduced, by the reflux water circulation pump 46, from a condensed water introduction unit 14d disposed closer to the top 14c of the regenerator 14 than the rich solution introduction unit 14a of the regenerator 14.

The CO₂ capture system 10 introduces the gas 11 containing CO₂ into the absorber 13 and brings the CO₂ in the gas 11 into contact with the CO₂ absorbent 12 to remove the CO₂. The gas having been supplied to the absorber 13 and brought into contact with the CO₂ absorbent 12 passes through the demister 110 and is discharged out of the system. Furthermore, the CO₂ capture system 10 introduces the rich solution 12A having absorbed CO₂ into the regenerator 14 and regenerates CO₂ by using reboiler steam. The entrained gas 41 in the regenerator 14 passes through the demister 110 and is supplied to the regenerator condensing unit 40. The CO₂ capture system 10 causes the CO₂ absorbent 12 to circulate through the absorber 13 and the regenerator 14 by means of a circulation line and be reused. The CO₂ capture system 10 condenses water, in the regenerator condensing unit 40, from the entrained gas 41 entraining the separated CO₂. The CO₂ capture system 10 separates the condensed water 44 resulting from cooling the entrained gas 41 and thereby condensing steam and the CO₂ gas 45. The CO₂ capture system 10 refluxes the condensed water 44 on a side closer to the top 14c of the regenerator 14 than to the rich solution introduction unit 14a thereof into which the rich solution 12A is introduced.

Next, the demister 110, which is installed in the absorber 13, will be described. As illustrated in FIG. 2, the demister 110 is disposed in a circular absorber body 112. The absorber body 112 serves as a gas flow path in the absorber through which the flue gas 11A flows. The absorber body 112 according to the first embodiment has a cylindrical shape having a circular cross-section. Note that the shape of the absorber body 112 is not limited to the above-mentioned cylindrical shape, and may have a rectangular cross-section, for example. The absorber body 112 vertically extends, and the flue gas 11A flows from the lower side to the upper side in the vertical direction.

The demister 110 includes a laminated unit 120 configured to trap a mist including the CO₂ absorbent. The laminated unit 120 includes a plurality of layers, each layer including a plurality of linear structures. When the flue gas 11A passes through the layers of the laminated unit 120, the mist contained in the flue gas 11A is trapped, and the trapped mist becomes drain water W and gets retained in the demister 110. The drain water W retained in the demister 110 is discharged by a mist discharge device 130 disposed on the lower side of the demister 110.

### Mist discharge device

Next, the mist discharge device 130 will be described. As illustrated in FIGS. 2 to 4, the mist discharge device 130 is disposed on the lower side of the demister 110, that is, disposed to be in contact with the demister 110 on the inlet side of the demister 110 that allows the flue gas 11A to flow in therethrough. The mist discharge device 130 guides the drain water W accumulating in the demister 110 to the lower side in the vertical direction, whereby the drain water W falls under its own weight.

The mist discharge device 130 includes a plurality of protrusions 135 protruding downward from the inlet side of the demister 110. Each of the protrusions 135 is a plate-like member extending downward and includes a plate having a vertical plane and a horizontal plane. The protrusions 135 are disposed to be horizontally spaced at predetermined intervals. In other words, the protrusions 135 as the plate-like members are disposed so that the plates thereof are disposed in parallel. Thus, the mist discharge device 130 includes a drain outlet in the shape of slits, as illustrated in FIG. 3. Each of the protrusions 135 has a rectangular cross-section perpendicular to the plate, as illustrated in FIG. 4.

The protrusions 135 are disposed to be in contact with the demister 110. The protrusions 135 guide the drain water W in the demister 110 toward the lower side in the vertical direction. The protrusions 135 may be configured to be hydrophilic in order to accelerate the guiding of the drain water W. For example, the protrusions 135 may be formed using a hydrophilic material. Specifically, the protrusions 135 are formed using a material with a smaller contact angle than the demister 110 has. Examples of the material with the smaller contact angle include nylon, which is a thermoplastic resin that can be easily molded. For example, the protrusions 135 may have a surface layer formed by a hydrophilic surface treatment. The surface layer is, for example, a coating film formed by applying a glassy coating having a small contact angle.

Next, a comparison of the performance of different types of the mist discharge devices 130 having different dimensions is made with reference to FIGS. 4 to 6. A parameter for the performance to be compared is a pressure loss in the absorber body 112. Taking a case without the mist discharge device 130 as 1, the ratio of pressure loss of each of the types is used as the parameter.

As illustrated in FIG. 4, the dimensions of the mist discharge device 130 are the protrusion height (a) of the protrusion 135, the thickness (b) of the protrusion 135, and the interval (c) between the protrusions 135 adjacent to each other. As illustrated in FIG. 5, the types of the mist discharge devices 130 are "ID5", "ID7", and "ID8". In "ID 5", the protrusion height (a) is 6 mm, the thickness (b) is 2 mm, and the interval (c) is 2 mm. In "ID 7", the protrusion height (a) is 1 mm, the thickness (b) is 2 mm, and the interval (c) is 4 mm. In "ID 8", the protrusion height (a) is 1 mm, the thickness (b) is 4 mm, and the interval (c) is 4 mm. Note that the interval (c) between the protrusions 135 in any of the mist discharge devices 130 is wider than the mesh size of a mesh in the demister 110.

In FIG. 6, the horizontal axis indicates a type, and the vertical axis indicates the ratio of pressure loss (pressure loss ratio). Note that ID4 is a case without the mist discharge device 130, in which the pressure loss ratio is taken as 1. In "ID5", the pressure loss ratio is lower than 0.5. Also in "ID7", the pressure loss ratio is lower than 0.5. Furthermore, also in "ID8", the pressure loss ratio is lower than 0.5. Note that, in "ID8", different types of the demisters 110 (meshes) are used, and in any of the types, the pressure loss ratio is lower than 0.5. Thus, it was confirmed that providing the mist discharge device 130 allowed the pressure loss in the absorber body 112 to be reduced. In other words, it was confirmed that discharging the drain water W in the demister 110 by the mist discharge device 130 suppressed a blockage of the absorber body 112 due to the drain water W and thereby prevented an increase in pressure loss.

### [Second Embodiment]

Next, a second embodiment will be described with reference to FIG. 7. Note that, in the second embodiment, to avoid duplicate descriptions, constituents different from those in the first embodiment will be described, whereas the same constituents as those in the first embodiment will be only given the same reference signs. FIG. 7 is a schematic cross-sectional view of a mist discharge device according to the second embodiment.

### Mist discharge device

A mist discharge device 150 according to the second embodiment includes protrusions 151 having a shape different from that in the first embodiment. The protrusions 151 are formed in such a manner that the flow direction of (a mist of) drain water W flowing down the protrusions 151 is inclined with respect to the vertical direction. Specifically, the cross section of the protrusion 151, taken perpendicularly to the plate, has a tapered shape that tapers down from the upper side of the protrusion 151 to the lower side thereof. The tapered shape may be, for example, triangular or trapezoidal, and is not particularly limited.

### [Third Embodiment]

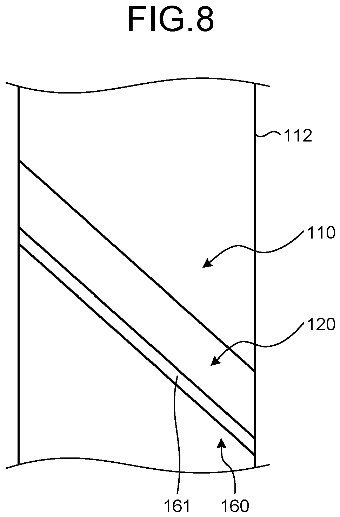

Next, a third embodiment will be described with reference to FIG. 8. Note that, in the third embodiment, to avoid duplicate descriptions, constituents different from those in the first and second embodiments will be described, whereas the same constituents as those in the first and second embodiments will be only given the same reference signs. FIG. 8 is a schematic diagram illustrating a mist discharge device according to the third embodiment.

### Mist discharge device

As in the case of the second embodiment, a mist discharge device 160 according to the third embodiment includes a protrusion 161 formed in such a manner that the flow direction of (a mist of) drain water W flowing down the protrusion 161 is inclined with respect to the vertical direction. Specifically, the protrusion 161 is inclined with respect to the horizontal direction so as to produce an inclined flow in a single direction from one end of the protrusion 161 to the other end thereof. In other words, the mist discharge device 160 is disposed to be inclined with respect to the horizontal direction. Specifically, the protrusion 161, which is a plate-like member, is disposed to extend with an inclination in such a manner that one horizontal end of the protrusion 161 is positioned on the upper side and the other horizontal end thereof is positioned on the lower side. Thus, the drain water W flowing down the protrusion 161 flows in the direction of the inclination of the protrusion 161.

Note that, in the first to third embodiments, the protrusions 135, 151, and 161 are plate-like members, but may be rod-like members extending downward, or may have any shape protruding downward without causing a blockage in the absorber body 112.

As described above, the mist discharge devices 130, 150, 160 and the absorbent absorber 13 described in the embodiments are understood, for example, as follows.

Each of the mist discharge devices 130, 150, and 160 according to a first aspect is a mist discharge device configured to discharge a mist trapped by the demister 110, in which the demister 110 is disposed in a gas flow path (the absorber body 112) allowing gas to flow from the lower side to the upper side in the vertical direction, has a lower side serving as the inlet side of the gas and has an upper side serving as the outlet side of the gas, and is configured to trap the mist contained in the gas, and the mist discharge devices 130, 150, and 160 respectively include the protrusions 135, 151, 161 protruding downward from the inlet side of the demister 110.

With this configuration, the mist trapped by the demister 110 flows down the protrusions 135 and is discharged to the outside of the demister 110. Thus, the mist can be suitably discharged to the outside of the demister 110, whereby accumulation of mist in the demister 110 can be suppressed, and thus re-scattering of the mist from the accumulated drain water can be suppressed.

In a second aspect, the protrusions 135, 151, 161 are plate-like members extending downward, and a plurality of the plate-like members are disposed to be horizontally spaced at predetermined intervals.

With this configuration, the mist can be suitably discharged with a simple structure.

In a third aspect, the protrusions 135, 151, 161 have a surface layer formed by a hydrophilic surface treatment.

With this configuration, discharging the mist can be suitably accelerated.

In a fourth aspect, the protrusions 135, 151, 161 are formed using a hydrophilic material.

With this configuration, discharging the mist can be suitably accelerated.

In a fifth aspect, the protrusions 151, 161 are formed in such a manner that the flow direction of the mist flowing down the protrusions 135, 151, 161 is inclined with respect to the vertical direction.

With this configuration, the mist flows down the protrusions 151, 161 in an inclined manner, whereby discharging the mist can be suitably accelerated.

In a sixth aspect, the protrusion 151 has a tapered shape that tapers down from the upper side of the protrusion 151 to the lower side thereof.

With this configuration, the simple shape allows the mist to flow in an inclination direction.

In a seventh aspect, the protrusion 161 is inclined with respect to the horizontal direction so as to produce an inclined flow in a single direction from one end of the protrusion 161 to the other end thereof.

With this configuration, the inclination of the protrusion 161 allows the mist to easily flow down in a single direction.

The absorbent absorber 13 according to an eighth aspect includes: the absorber body 112 to which CO₂-containing gas is supplied; an absorbent supply unit (the lean solution supply line 53) configured to supply an absorbent to the absorber body 112; the demister 110 disposed downstream from an absorbent supply point of the absorbent supply unit of the absorber body 112 in the gas flow direction and configured to trap a mist containing a CO₂-containing adsorbent; and the mist discharge device 130, 150, or 160 configured to discharge the mist trapped by the demister 110.

With this configuration, the absorbent absorber 13 can suppress re-scattering of mist.

### Reference Signs List

- 10: CO₂ capture system
- 11: introduced gas (gas)
- 12: CO₂ absorbent
- 12A: Rich solution
- 12B: Lean solution
- 13A: CO₂ absorber unit
- 13: CO₂ absorber
- 14: Absorbent regenerator
- 41: Entrained gas
- 42: Cooler
- 43: Gas-liquid separator

- 44: Regenerator condensed water
- 45: CO₂ gas
- 46: Reflux water circulation pump
- 50: Rich solution supply line
- 51: Rich solution pump
- 52: Rich-and-lean solutions heat exchanger
- 53: Lean solution supply line
- 110: Demister
- 112: Absorber body
- 130, 150, 160: Mist discharge device
- 135, 151, 161: Protrusion

## Claims

1. A mist discharge device configured to discharge a mist trapped by a demister, wherein
the demister is disposed in a gas flow path allowing gas to flow from a lower side to an upper side in a vertical direction, the demister having a lower side serving as an inlet side of the gas and an upper side serving as an outlet side of the gas, the demister being configured to trap the mist contained in the gas, and
the mist discharge device comprises a protrusion protruding downward from the inlet side of the demister.

2. The mist discharge device according to claim 1,
wherein
the protrusion is a plate-like member extending downward, and
the plate-like member includes a plurality of plate-like members disposed to be horizontally spaced at predetermined intervals.

3. The mist discharge device according to claim 1 or 2, wherein the protrusion has a surface layer formed by a hydrophilic surface treatment.

4. The mist discharge device according to any one of claims 1 to 3, wherein the protrusion is formed using a hydrophilic material.

5. The mist discharge device according to any one of claims 1 to 4, wherein the protrusion is formed in such a manner that a flow direction of the mist flowing down the protrusion is inclined with respect to the vertical direction.

6. The mist discharge device according to claim 5, wherein the protrusion has a shape that tapers down from the upper side to the lower side.

7. The mist discharge device according to claim 5,
wherein the protrusion is inclined with respect to a horizontal direction to produce an inclined flow in a single direction from one end of the protrusion to another end of the protrusion.

8. An absorbent absorber, comprising:
an absorber body to which CO₂-containing gas is supplied;
an absorbent supply unit configured to supply an absorbent to the absorber body;
a demister
disposed downstream from an absorbent supply point of the absorbent supply unit of the absorber body in a flow direction of the gas, and
configured to trap a mist containing a CO₂-containing absorbent; and
the mist discharge device according to any one of claims 1 to 7 to discharge the mist trapped by the demister.
